# EUROPEAN PATENT SPECIFICATION

(11) **EP 3 401 445 B1**
(45) Date of publication and mention of the grant of the patent: **19.08.2020**
(21) Application number: 18171426.2
(22) Date of filing: 09.05.2018
(51) Int. Cl.: E02D 27/42, E04H 12/08, F03D 13/20, E02D 27/50

(54) **ANCHORING SECTION FOR A FOUNDATION STRUCTURE**
VERANKERUNGSABSCHNITT FÜR EINE FUNDAMENTSTRUKTUR
SECTION D'ANCRAGE POUR UNE STRUCTURE DE FONDATION

(30) Priority: 09.05.2017 DK 201770328
(43) Date of publication of application: 14.11.2018
(73) Proprietor: VindWind ApS, 7120 Vejle Øst (DK)
(72) Inventor: HANGEL, Jørgen, 7120 Vejle Øst (DK)
(74) Representative: Tellefsen, Jens J.

(56) References cited:
- WO-A1-2011/058158
- WO-A2-2011/023415
- DE-A1- 19 832 921
- DE-U1-202005 011 492
- JP-A- H09 250 256
- US-A- 5 375 353
- US-A1- 2011 138 729

## Description

### Field of the Invention

The present invention relates to an anchoring section for a foundation, a foundation assembled from a plurality of anchoring sections as well as a tower construction wherein a foundation made from sections as well as a bridge construction likewise using the anchoring sections in the foundation structure.

### Background of the Invention

Foundation structures for large civil works such as bridges, towers and in particular wind turbines are usually made in situ and involve a substantial amount of design work and on site work. This is a substantial part of the overall cost, and often, in particular when the designs are directed at wind turbine towers or small bridges, more or less standardized solutions could be used, but due to the lack of such standardized solutions, specific designs are carried out for each and every structure.

WO 2011/058158 discloses a wind turbine wherein the pylon is assembled from premanufactured panels. The panels are anchored to a plate foundation by means of bolts. Furthermore the foundation plate is provided with anchoring means for cables, which cables are guided through (in use) vertical apertures in the concrete panels forming the pylon, such that the cables may be tensioned, thereby compressing the panels from which the pylon is assembled.

GB 2521468 discloses a mast/pylon for a vertical axis wind turbine assembled from steel elements. In order to counter the horizontal forces imparted to the pylon. A foundation structure comprising a number of horizontal beams extending radially from a lower part of the tower is provided. At the free ends the beams are provided with traditional concrete foundations.

### Object of the Invention

Consequently, it is an aim of the present invention to provide an anchoring section which may be assembled with other anchoring sections in order to provide a standardized foundation structure.

Furthermore, the invention also provides a novel foundation assembled from a plurality of novel anchoring sections and illustrating the use of such a foundation structure firstly in a vertical configuration where the foundation structure is used for a foundation for a tower construction, and secondly in a horizontal or substantially horizontal orientation where the foundation structure is used in connection with the bridge construction.

### Description of the Invention

The invention addresses this by providing an anchoring section for a foundation, which anchoring section comprises an inner shell and an outer shell arranged substantially parallel at a mutual distance, each shell having longitudinal side edges and in use upper and lower edges, and first and second side members, said side members having longitudinal side edges and in use upper and lower edges, where said side members are connected to said longitudinal side edges of the inner and outer shells, such that the inner and outer shells and the first and second side members delimits a volume, and where an anchoring member is provided in said volume between the inner and outer shells and first and second side members, and where the side members comprises means for connecting to a similar anchoring section.

The combination of a strong box construction together with the possibility of connecting to a further similar anchoring section provides for a standardized method in which to create the anchoring section in a foundation.

The anchoring section serves to transfer the forces from the structure which is built in connection with the foundation and thereby the anchoring sections to the ground.

For this purpose the side members extend beyond the outer shell in a further advantageous embodiment of the invention. In this manner the transfer of forces from the anchoring section to the surroundings, for example a concrete mass, is facilitated. The extent of the side members may also facilitate and ease the connection between adjacent anchoring sections.

In a further advantageous embodiment the upper edge of the side members in use is below the upper edge of the inner and/or outer shell. In this manner either the outer or the inner shell serves as guidance for the structure which is placed on top of the anchoring section thereby easing the further construction work and ensuring that the forces from the structure which is to be built on top of the anchoring section is positioned correctly.

In a still further advantageous embodiment of the invention the anchoring member is provided with one or more apertures, where the axis through the aperture is parallel to the longitudinal side edges of the inner and/or outer shells. The anchoring member arranged in the anchoring section is particularly useful when the construction which is to be placed on top of the foundation assembled from a plurality of anchoring sections includes cables such as for example in post-stressed concrete structures. The cables may be threaded through the apertures and the anchoring member may be used as a land when the tension cables are tensioned. As the anchoring section may be accessible when assembled to a foundation it is possible at a later stage in the construction's life to re-access the tension cables and in this manner control that the tension is correctly applied and check for potential damage, corrosion or the like.

In a further advantageous embodiment of the invention the outer and inner shells are curved having a predetermined radius, where the center of the radius is an axis parallel to the longitudinal side edges of the shells where the outer shell has a larger dimension between side edges than the inner shell, such that the side members are arranged parallel to the radius.

In this figuration a substantially circular foundation structure may be assembled from a number of anchoring sections, for example when it is desirable to use ring-shaped construction elements on top of the foundation.

In a further advantageous embodiment, however, the inner and outer shells are flat where the outer shell has a larger dimension between side edges than the inner shell, such that the side members are arranged parallel to a radius. It is obviously cheaper to manufacture anchoring sections from flat steel plates which, however, will create some difficulties if circular elements of the construction above is to be placed on the foundation section, but other constructions where this is not so important the cost of the foundation may be dramatically reduced with this embodiment where the shells are manufactured from a plate material.

In a still further advantageous embodiment of the anchoring section the outer shell and/or the side members are provided with means for attaching reinforcement to said outer shell and/or side member.

Typically, the anchoring sections when assembled to a foundation will be embedded in concrete on the outside of the structure, and for these purposes it is advantageous to attach reinforcement to the anchoring sections where the reinforcement in use extend into this concrete mass in order to create a solid connection and thereby a load and force transferring connection between the anchoring sections and the surrounding concrete which then will cooperate in functioning as one coherent foundation structure.

The invention is also directed at a foundation assembled from plurality of anchoring sections according to any of claims 1 to 6, wherein the anchoring sections are arranged such that side members on one section is in contact with side members of two adjacent sections, and where connection means are provided for connecting adjacent contacting side members. It is clear that such a foundation assembled from novel and inventive anchoring sections as discussed above will provide the advantages as already mentioned above and which will be obvious to the skilled person.

In practice, between 3 and 24 anchoring sections are assembled to form the foundation. Depending on the size of the anchoring sections as well as the desired size of the foundation, a relatively limited number of anchoring sections is assembled to form the foundation will address most needs.

In one implementation of the foundation using the anchoring sections according to the invention the foundation is for a tower construction wherein a foundation as discussed above where said tower is constructed from arranging at least one tower element having a geometry at a lower end fitting between the outer and inner shells, such that the tower element is supported directly or by means of adjustment blocks by the upper edges of the side members, where a number of tension cables are passed through the tower element and fastened to the anchoring member, and optionally where the space after the cables has been tensioned is filled with concrete.

The foundation in this embodiment consequently provides a standardized, easy-to-use foundation structure where the tension cables can be easily accessed and tensioned as the tower is raised. The space inside the anchoring section may be filled with concrete if this is desired or the tension cables in the anchoring section may be covered by lose pipes whereafter the concrete is cast such that it is still possible to tension the cables even though the space is filled with concrete due to the fact that the concrete will not enter the space between the pipes and the cables whereby the cables are free to move allowing for adjustment and control around the anchoring member.

The inventive anchoring section may also be used for a bridge construction wherein one or more anchoring sections as discussed above are arranged side by side forming a substantially flat foundation structure where the inner shell is facing upwards and where at least one bridge deck element having a geometry in one end fitting between the inner and outer shell, and resting on the upper edges of the side members, where one or more tension cables from the bridge deck construction is transferred, tensioned and fastened to the anchoring member.

This type of foundation is particularly useful for post-tension constructions in that after the first bridge deck element is positioned in the foundation and the tension cable's tension the connection between the bridge deck element and the foundation is firmly established. Such a foundation will enjoy the same advantages as already discussed above.

The anchoring section provided with extended side members in order to be assembled with adjacent anchoring sections, may also be assembled with other types of structures. For example for off shore installations, where flanges are provided on the offshore construction such that the side members can be connected to the off shore construction in the same manner as discussed above, the inventive anchoring section according to the invention may be used. For structures not having suitable flanges, extra flanges may be established, for example by welding the flanges on the existing construction. In this manner it becomes possible to reinforce and/or extend already existing structures in a safe and economic manner.

### Description of the Drawing

The invention will now be explained with reference to the accompanying drawings wherein
- Figure 1: illustrates an anchoring section
- Figure 2: illustrates a foundation structure seen from above
- Figure 3: illustrates a schematic view of a foundation structure assembled from a number of anchoring sections
- Figure 4: illustrates the accommodation of the concrete ring element
- Figure 5: illustrates the anchoring section according to the present invention

### Detailed Description of the Invention

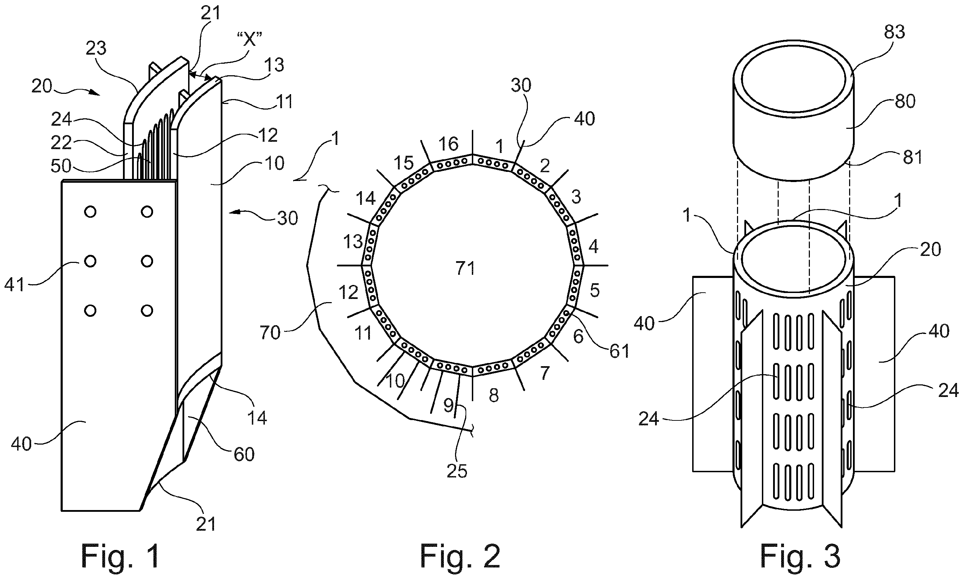

In figure 1 is schematically illustrated an anchoring section 1 according to the present invention. The anchoring section 1 comprises an inner shell 10 and an outer shell 20. The shells are arranged in parallel at a mutual distance "x". Each shell has longitudinal side edges 11, 12, 21, 22 and upper and lower edges 13, 14, 23, 24. The orientation of the upper and lower edges are defined as the anchoring section will be used when it is part of a foundation structure used for a vertical construction such as for example a tower, pillar or the like.

As will be evident below the invention may also be used for for example bridges or beams such that the inner section will be arranged facing upwards whereby the upper and lower in those embodiments shall be construed as forward and rearward side edges.

The anchoring section is furthermore provided with first and second side members 30, 40. The side members 30, 40 are connected to respective longitudinal side edges of the inner and outer shells such that the inner and outer shells 10, 20 together with the side members 30, 40 form a space 50. Inside this space 50 is provided an anchoring member 60 which as illustrated in figure 1 forms the bottom of the space.

The side members 30, 40 are furthermore provided with apertures 41 (only apertures on one side member are illustrated, but all side members will have apertures arranged in a corresponding pattern). The purpose of the apertures 41 is to be able to connect adjacent anchoring sections to each other. By inserting a bolt to overlapping apertures 41 of adjacent anchoring sections 1 it is possible to assemble a foundation as for example illustrated in figure 2. In addition to providing flanges/side members by which adjacent anchoring sections may be assembled, the side members also due to the extent beyond the outer shell provide anchoring in the concrete into which the anchoring section is intended to be cast in.

Turning briefly to figure 2 a foundation structure seen from above is illustrated. In this embodiment the foundation structure comprises 16 anchoring sections where adjacent side members 30, 40 are connected for example by bolt connections.

The outer shell may, as illustrated in figure 1 and 3, further be provided with apertures in this embodiment in the shape of slits 24. The purpose of the slits 24 is to be able to insert external reinforcement 25 as illustrated in figure 2. The external reinforcement 25 will connect the concrete 70 which is placed outside the outer shell. The concrete mass 70 will integrate with the foundation structure and thereby the anchoring section 1 due to the provision of the extended side members 40 and the reinforcement 25.

In this manner the entire foundation structure, i.e. the concrete mass 70 and the anchoring sections 1 will work as a coherent unit thereby fulfilling its foundation purposes. The central part 71 of the foundation may be left empty such that for example tension cables, threaded through apertures 61 provided in the anchoring member may be post-tensioned. Also for control purposes it is desirable to be able to access the ends of the tension cables in order to check for correct tension, corrosion etc.

In figure 3 is illustrated a schematic view of a foundation structure assembled from a number of anchoring sections, in this embodiment six sections. The side members 40 of adjacent anchoring sections 1 are bolted together (not illustrated). The slits 24 for attaching external reinforcement as discussed above with reference to figure 2 is illustrated in different levels such that the entire concrete mass 70 cast on the outside may be activated together with the foundation.

For illustrative purposes a concrete tower element 80 is illustrated elevated above the foundation structure. The distance x between the outer and inner shell is designed such that the lower rim 81 of the concrete ring 80 will be accommodated in the space between the inner and outer shell 10, 20.

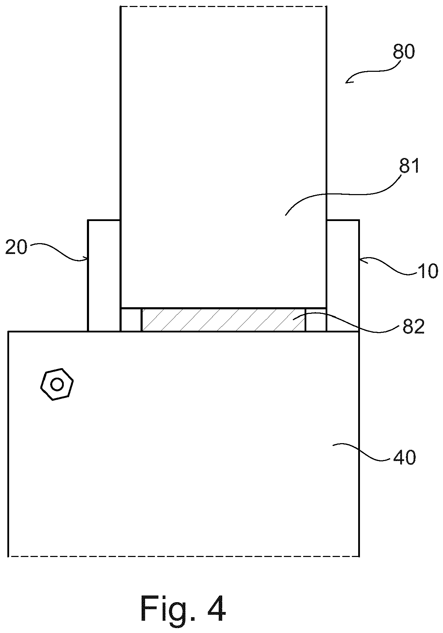

With reference to figure 4 the accommodation of the concrete ring element 80 between the inner and outer shells 10, 20 is illustrated in more detail. The side members 40 substantially carry the element 80 and in order to align the element 80 distance keepers 82 may be provided such that the top rim 83 (figure 3) whereby when using distance keepers 82 of varying height the top rim 83 may be adjusted to the exact correct orientation.

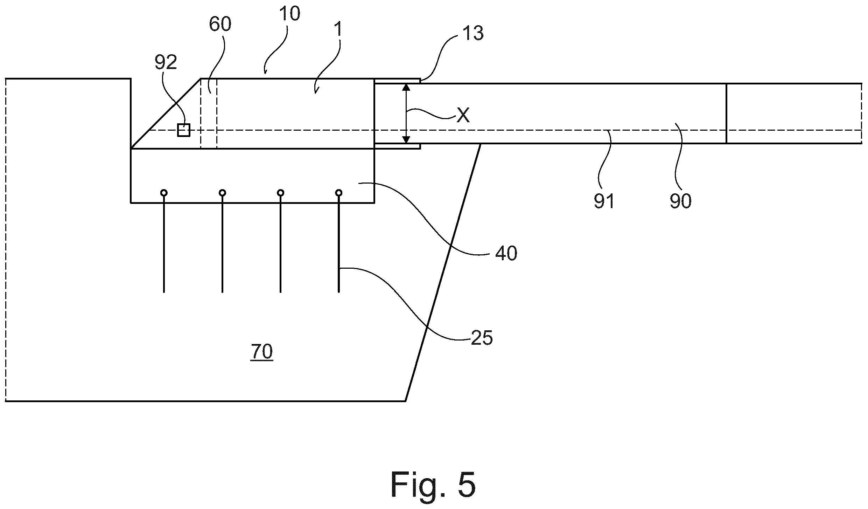

Turning to figure 5 the anchoring section 1 according to the present invention is used in a foundation for a bridge construction. The inner shell 10 is in this embodiment facing upwards, and the upper side is in this case the forward side 13. A concrete bridge deck element 90 is inserted between the inner and outer shells 10, 20 respectively corresponding to the distance x. Tension cables 91 are schematically illustrated in dashed lines showing that the tension cables 91 pass through the anchoring member 60 and are tensioned by tension means 92 in the shape of for example nuts working in conjunction with a threaded end of the tension cables 91.

From the side members 40 extra reinforcement 25 extends into the concrete mass 70 thereby creating a solid connection between the concrete mass 70 and the anchoring sections 1 providing a stable and standardized foundation structure for the bridge deck elements 90.

In fig. 6 is illustrated a cross-section through a foundation structure assembled from a number of anchoring sections 1. The anchoring sections 1 are in this embodiment rectangular in cross-section. In this context at least rectangular also encompass quadratic. In order to be able to create a substantially circular foundation intermediate sections 90 are provided between adjacent anchoring sections 1. Each intermediate section 90 has two side members 91 corresponding to the side members 30, 40 of the anchoring sections 1. Adjacent side members 91, 30, 40 may be assembled in the same manner as described above. The angle between the side members 91 of the intermediate member 90 may of cause be determined according to the desired overall radius. It is also contemplated that the intermediate sections may be used to create other foundation shapes.

The intermediate section 90 may also be provided with a reinforcement member 92 in order to create a stable transition between adjacent anchoring sections 1.

## Claims

1. An anchoring section (1) for a foundation adapted to be embedded in the soil, which anchoring section (1) comprises an inner shell (10) and an outer shell (20) arranged substantially parallel at a mutual distance, each shell having longitudinal side edges (11, 12, 21, 22) and in use upper and lower edges (13, 14, 23, 24), and first and second side members (30, 40), said side members (30, 40) having longitudinal side edges (11, 12, 21, 22) and in use upper and lower edges (13, 14, 23, 24), where said side members (30, 40), are connected to said longitudinal side edges (11, 12, 21, 22) of the inner and outer shells (10, 20), such that the inner and outer shells (10, 20) and the first and second side members (30, 40) delimits a volume, and where an anchoring member (1) is provided in said volume between the inner and outer shells (10, 20) and first and second side members (30, 40), and where the side members (30,40) comprises means for connecting to a similar anchoring section (1).

2. Anchoring section (1) according to claim 1 wherein the side members (30, 40) extend beyond the outer shell.

3. Anchoring section (1) according to claim 1 or 2 wherein the upper edgeof the side members (30, 40) in use is below the upper edge (13, 23) of the inner and/or outer shell (10, 20).

4. Anchoring section (1) according to claim 1 wherein the anchoring member (1) is provided with one or more apertures (41), where the axis through the aperture (41) is parallel to the longitudinal side edges (11, 12, 21, 22) of the inner and/or outer shells (10, 20).

5. Anchoring section (1) according to claim 1 wherein the outer and inner shells (10, 20) are curved having a predetermined radius, where the center of the radius is an axis parallel to the longitudinal side edges (11, 12, 21, 22) of the shells where the outer shell (20) has a larger dimension between side edges (30, 40) than the inner shell (10), such that the side members (30,40) are arranged parallel to the radius.

6. Anchoring section (1) according to claim 1 wherein the outer and inner shells (10, 20) are flat, where the outer shell (20) has a larger dimension between side edges (30,40) than the inner shell (10), such that the side members (30,40) are arranged parallel to a radius.

7. Anchoring section (1) according to any preceding claim, wherein the outer shell (20) and/or the side members (30, 40) are provided with means for attaching reinforcement to said outer shell (20) and/or side member (30, 40).

8. Foundation assembled from a plurality of anchoring sections (1) according to any of claims 1 to 6, wherein the anchoring sections (1) are arranged such that side members (30, 40) on one section (1) is in contact with side members (30,40) of two adjacent sections (1), and where connection means are provided for connecting adjacent contacting side members (30, 40).

9. Foundation according to claim 8 wherein between 3 and 24 anchoring sections (1) are assembled to form the foundation.

10. Foundation according to claim 8 or 9 wherein the anchoring section (1) in a cross section perpendicular to the inner shell (10) and the outer shell (20) has a rectangular shape.

11. Foundation according to claim 10 wherein intermediate sections (1) having first and second side members (30, 40) arranged at an oblique angle relative to each other, are provided, and optionally a reinforcing member between said first and second side members (30, 40)

12. Tower construction wherein a foundation according to any of claims 8 or 9 is used, where said tower is constructed from arranging at least one tower element having a geometry at a lower end fitting between the outer and inner shells, such that the tower element (80) is supported directly or by means of adjustment blocks by the upper edges of the side members (30,40), where a number of tension cables (91) are passed through the tower element and fastened to the anchoring member (60), and optionally where the space after the cables (91) has been tensioned is filled with concrete.

13. Tower construction according to claim 12 wherein the anchor member is provided with apertures corresponding to the desired number of tension cables (91), and where the means (92) for tensioning the cables (91) are provided outside the space, thereby being accessible from inside the foundation.

14. Bridge construction wherein one or more anchoring sections according to any of claims 1 to 4 or 7 are used, where a desired number of anchoring sections (1) are assembled side by side forming a substantially flat foundation structure wherein the inner shell (10) is facing upwards and where at least one bridge deck element having a geometry in one end fitting between the inner and outer shell (10, 20), and resting on the upper edges of the side members (30, 40), where one or more tension cables (91) from the bridge deck construction is transferred, tensioned and fastened to the anchoring member 60.

## Patentansprüche

1. Verankerungsabschnitt (1) für ein Fundament, der angepasst ist, um in der Erde eingebettet zu werden, wobei der Verankerungsabschnitt (1) eine Innenschale (10) und eine Außenschale (20) umfasst, die in einer gemeinsamen Entfernung im Wesentlichen parallel angeordnet sind, wobei jede Schale longitudinale Seitenkanten (11, 12, 21, 22) und im Gebrauch eine Ober- und Unterkante (13, 14, 23, 24) und ein erstes und zweites Seitenelement (30, 40) aufweist, wobei die Seitenelemente (30, 40) longitudinale Seitenkanten (11, 12, 21, 22) und im Gebrauch eine Ober- und Unterkante (13, 14, 23, 24) aufweisen, wobei die Seitenelemente (30, 40) mit den longitudinalen Seitenkanten (11, 12, 21, 22) der Innen- und Außenschale (10, 20) verbunden sind, sodass die Innen- und Außenschale (10, 20) und das erste und zweite Seitenelement (30, 40) ein Volumen begrenzen, und wobei ein Verankerungselement (1) in dem Volumen zwischen der Innen- und Außenschale (10, 20) und dem ersten und zweiten Seitenelement (30, 40) bereitgestellt ist und wobei die Seitenelemente (30, 40) Mittel zum Verbinden mit einem ähnlichen Verankerungsabschnitt (1) umfassen.

2. Verankerungsabschnitt (1) nach Anspruch 1, wobei sich die Seitenelemente (30, 40) über die Außenschale hinaus erstrecken.

3. Verankerungsabschnitt (1) nach Anspruch 1 oder 2, wobei die Oberkante der Seitenelemente (30, 40) im Gebrauch unter der Oberkante (13, 23) der Innen- und/oder Außenschale (10, 20) liegt.

4. Verankerungsabschnitt (1) nach Anspruch 1, wobei das Verankerungselement (1) mit einer oder mehreren Öffnungen (41) bereitgestellt ist, wobei die Achse durch die Öffnung (41) parallel zu den longitudinalen Seitenkanten (11, 12, 21, 22) der Innen- und/oder Außenschale (10, 20) ist.

5. Verankerungsabschnitt (1) nach Anspruch 1, wobei die Außen- und Innenschale (10, 20) gekrümmt sind und einen vorbestimmten Radius aufweisen, wobei das Zentrum des Radius eine Achse ist, die parallel zu den longitudinalen Seitenkanten (11, 12, 21, 22) der Schalen ist, wobei die Außenschale (20) eine größere Abmessung zwischen den Seitenkanten (30, 40) aufweist als die Innenschale (10), sodass die Seitenelemente (30, 40) parallel zu dem Radius angeordnet sind.

6. Verankerungsabschnitt (1) nach Anspruch 1, wobei die Außen- und Innenschale (10, 20) flach sind, wobei die Außenschale (20) eine größere Abmessung zwischen den Seitenkanten (30, 40) aufweist als die Innenschale (10), sodass die Seitenelemente (30, 40) parallel zu einem Radius angeordnet sind.

7. Verankerungsabschnitt (1) nach einem der vorangehenden Ansprüche, wobei die Außenschale (20) und/oder die Seitenelemente (30, 40) mit Mitteln zum Anbringen einer Verstärkung an der Außenschale (20) und/oder dem Seitenelement (30, 40) bereitgestellt sind/ist.

8. Fundament, das aus einer Vielzahl von Verankerungsabschnitten (1) nach einem der Ansprüche 1 bis 6 zusammengebaut ist, wobei die Verankerungsabschnitte (1) derart angeordnet sind, dass die Seitenelemente (30, 40) an einem Abschnitt (1) mit den Seitenelementen (30, 40) von zwei benachbarten Abschnitten (1) in Berührung stehen und wobei Verbindungsmittel zum Verbinden von benachbarten sich berührenden Seitenelementen (30, 40) bereitgestellt sind.

9. Fundament nach Anspruch 8, wobei zwischen 3 und 24 Verankerungsabschnitte (1) zusammengebaut sind, um das Fundament zu bilden.

10. Fundament nach Anspruch 8 oder 9, wobei sich der Verankerungsabschnitt (1) in einem Querschnitt senkrecht zu der Innenschale (10) befindet und die Außenschale (20) eine rechteckige Form aufweist.

11. Fundament nach Anspruch 10, wobei Zwischenabschnitte (1), die ein erstes und zweites Seitenelement (30, 40) aufweisen und in einem stumpfen Winkel bezogen aufeinander angeordnet sind, bereitgestellt sind, und gegebenenfalls ein Verstärkungselement zwischen dem ersten und zweiten Seitenelement (30, 40).

12. Turmkonstruktion, wobei ein Fundament nach einem der Ansprüche 8 oder 9 verwendet wird, wobei der Turm aus Folgendem konstruiert ist: Anordnen von zumindest einem Turmelement, das eine Geometrie an einem unteren Ende aufweist, die zwischen die Außen- und Innenschale passt, sodass das Turmelement (80) direkt oder mithilfe von Einstellungsblöcken durch die Oberkanten der Seitenelemente (30, 40) gestützt wird, wobei eine Anzahl an Zugseilen (91) durch das Turmelement geführt und an dem Verankerungselement (60) befestigt wird und wobei der Raum hinter den Kabeln (91), die gespannt wurden, gegebenenfalls mit Konkret gefüllt wird.

13. Turmkonstruktion nach Anspruch 12, wobei das Ankerelement mit Öffnungen bereitgestellt ist, die der gewünschten Anzahl an Zugkabeln (91) entspricht und wobei die Mittel (92) zum Spannen der Kabel (91) außerhalb des Raums bereitgestellt sind, wodurch auf diese von innerhalb des Fundaments zugegriffen werden kann.

14. Brückenkonstruktion, wobei ein oder mehrere Verankerungsabschnitte nach einem der Ansprüche 1 bis 4 oder 7 verwendet werden, wobei eine gewünschte Anzahl an Verankerungselementen (1) nebeneinander zusammengebaut werden und eine im Wesentlichen flache Fundamentstruktur bilden, wobei die Innenschale (10) nach oben zeigt und wobei zumindest ein Brückendeckelement eine Geometrie an einem Ende aufweist, die zwischen die Innen- und Außenschale (10, 20) passt und auf den Oberkanten der Seitenelemente (30, 40) aufliegt, wobei ein oder mehrere Zugseile (91) von der Brückendeckkonstruktion auf das Verankerungselement 60 übertragen, an diesem gespannt und befestigt sind.

## Revendications

1. Section d'ancrage (1) pour une fondation adaptée pour être encastrée dans le sol, laquelle section d'ancrage (1) comprend une coque interne (10) et une coque externe (20) disposées sensiblement parallèlement à une distance mutuelle, chaque coque ayant des bords latéraux longitudinaux (11, 12, 21, 22) et des bords supérieur et inférieur en cours d'utilisation (13, 14, 23, 24), et des premier et second éléments latéraux (30, 40), lesdits éléments latéraux (30, 40) ayant des bords latéraux longitudinaux (11, 12, 21, 22) et des bords supérieur et inférieur en cours d'utilisation (13, 14, 23, 24), où lesdits éléments latéraux (30, 40), sont reliés auxdits bords latéraux longitudinaux (11, 12, 21, 22) des coques interne et externe (10, 20), de sorte que les coques interne et externe (10, 20) et les premier et second éléments latéraux (30, 40) délimitent un volume, et où un élément d'ancrage (1) est prévu dans ledit volume entre les coques interne et externe (10, 20) et les premier et second éléments latéraux (30, 40), et où les éléments latéraux (30, 40) comprennent des moyens de liaison à une section d'ancrage similaire (1).

2. Section d'ancrage (1) selon la revendication 1, dans laquelle les éléments latéraux (30, 40) s'étendent au-delà de la coque externe.

3. Section d'ancrage (1) selon la revendication 1 ou 2, dans laquelle le bord supérieur des éléments latéraux (30, 40) en cours d'utilisation est en dessous du bord supérieur (13, 23) de la coque interne et/ou externe (10, 20).

4. Section d'ancrage (1) selon la revendication 1, dans laquelle l'élément d'ancrage (1) est pourvu d'une ou de plusieurs ouvertures (41), où l'axe traversant l'ouverture (41) est parallèle aux bords latéraux longitudinaux (11, 12, 21, 22) des coques interne et/ou externe (10, 20).

5. Section d'ancrage (1) selon la revendication 1, dans laquelle les coques externe et interne (10, 20) sont incurvées ayant un rayon prédéterminé, où le centre du rayon est un axe parallèle aux bords latéraux longitudinaux (11, 12, 21, 22) des coques où la coque externe (20) a une plus grande dimension entre les bords latéraux (30, 40) que la coque interne (10), de sorte que les éléments latéraux (30, 40) sont disposés parallèlement au rayon.

6. Section d'ancrage (1) selon la revendication 1, dans laquelle les coques externe et interne (10, 20) sont plates, où la coque externe (20) a une plus grande dimension entre les bords latéraux (30, 40) que la coque interne (10), de sorte que les éléments latéraux (30, 40) sont disposés parallèlement à un rayon.

7. Section d'ancrage (1) selon une quelconque revendication précédente, dans laquelle la coque externe (20) et/ou les éléments latéraux (30, 40) sont pourvus de moyens de fixation d'un renfort à ladite coque externe (20) et/ou audit élément latéral (30, 40).

8. Fondation assemblée à partir d'une pluralité de sections d'ancrage (1) selon l'une quelconque des revendications 1 à 6, dans laquelle les sections d'ancrage (1) sont disposées de sorte que des éléments latéraux (30, 40) sur une section (1) sont en contact avec des éléments latéraux (30, 40) de deux sections adjacentes (1), et où des moyens de liaison sont prévus pour relier des éléments latéraux (30, 40) de contact adjacents.

9. Fondation selon la revendication 8, dans laquelle entre 3 et 24 sections d'ancrage (1) sont assemblées pour former la fondation.

10. Fondation selon la revendication 8 ou 9, dans laquelle la section d'ancrage (1) dans une section transversale perpendiculaire à la coque interne (10) et à la coque externe (20) a une forme rectangulaire.

11. Fondation selon la revendication 10, dans laquelle des sections intermédiaires (1) ayant des premier et second éléments latéraux (30, 40) disposés selon un angle oblique l'un par rapport à l'autre, sont prévues, et éventuellement un élément de renfort entre lesdits premier et second éléments latéraux (30, 40)

12. Construction de tour dans laquelle une fondation selon l'une quelconque des revendications 8 ou 9 est utilisée, où ladite tour est construite à partir de la disposition d'au moins un élément de tour ayant une géométrie au niveau d'une extrémité inférieure s'adaptant entre les coques externe et interne, de sorte que l'élément de tour (80) est supporté directement ou au moyen de blocs de réglage par les bords supérieurs des éléments latéraux (30, 40), où un certain nombre de câbles de tension (91) passent à travers l'élément de tour et sont fixés à l'élément d'ancrage (60), et éventuellement où l'espace après que les câbles (91) ont été tendus est rempli de béton.

13. Construction de tour selon la revendication 12, dans laquelle l'élément d'ancrage est pourvu d'ouvertures correspondant au nombre souhaité de câbles de tension (91), et où les moyens (92) de tension des câbles (91) sont prévus à l'extérieur de l'espace, étant ainsi accessibles de l'intérieur de la fondation.

14. Construction de pont dans laquelle une ou plusieurs sections d'ancrage selon l'une quelconque des revendications 1 à 4 ou 7 sont utilisées, où un nombre souhaité de sections d'ancrage (1) sont assemblées côte à côte formant une structure de fondation sensiblement plate dans laquelle la coque interne (10) est orientée vers le haut et où au moins un élément de tablier de pont ayant une géométrie dans une extrémité s'adapte entre la coque interne et externe (10, 20), et reposant sur les bords supérieurs des éléments latéraux (30, 40), où un ou plusieurs câbles de tension (91) de la construction de tablier de pont sont transférés, tendus et fixés à l'élément d'ancrage 60.
